Europäisches Patentamt

European Patent Office

Office européen des brevets

(11) Publication number: **0 193 956**
A2

## (12) EUROPEAN PATENT APPLICATION

(21) Application number: **86102973.4**

(22) Date of filing: **06.03.86**

(51) Int. Cl.⁴: **B 60 H 1/22,** B 60 H 1/34, F 24 F 13/075

(30) Priority: **08.03.85 IT 5310685 U**

(43) Date of publication of application: **10.09.86** Bulletin 86/37

(84) Designated Contracting States: **DE FR GB**

(71) Applicant: **FOGGINI PROGETTI S.r.l., Via Aosta, 17, I-10092 Beinasco Torino (IT)**

(72) Inventor: **Foggini, Paolo, Strada Moncalieri 2, I-10020 Revigliasco Torinese (Torino) (IT)**

(74) Representative: **Modiano, Guido et al, MODIANO, JOSIF, PISANTY & STAUB Modiano & Associati Via Meravigli, 16, I-20123 Milan (IT)**

(54) Air outlet fitting for air conditioning or ventilation systems in motor vehicles.

(57) The air outlet fitting comprises an air-ducting conduit (10, 12) and control and/or deflection vanes (14, 16, 18) for the air flow being delivered. The conduit (10) accommodates a fan (22), and electric resistance heating elements (26), arranged to be swept by the airflow through the conduit (10) and connected to the motor vehicle electric system.

"AIR OUTLET FITTING FOR AIR CONDITIONING OR VENTILATION SYSTEMS IN MOTOR VEHICLES"

The present invention relates to an air outlet fitting for air conditioning or ventilation systems in motor vehicles.

In air conditioning or ventilation systems usually installed in motor vehicles, the outside air picked up through one or more conduits is directed into the passenger compartment through outlet fittings, usually after undergoing (if desired) heating by the heat generated by the engine, e.g. by directing the flow of air through a heat exchanger supplied with water from the cooling system of the vehicle's engine. The path for the air to be directed into the passenger compartment, in a known manner, usually includes a fan operable to selectively increase its rate of flow, where needed.

Such air outlet fittings as currently employed in motor vehicle air conditioning and ventilation systems have the advantage of providing both heat and ventilation to the passenger compartment, with simple and economical means. However, such prior systems are not devoid of drawbacks, not least of which resides in the fact that heated air can only be supplied at the air outlet fittings after the vehicle's engine has reached its steady operative temperature, that is after the motor vehicle has been running for several minutes, during which time the user is left in the cold.

Another disadvantage of prior air outlet fittings in air conditioning or ventilation systems in motor vehicles is that they cannot provide a means of heating the vehicle's passenger compartment, neither in the event of the vehicle's own heat exchanger not being operative, nor in the case of vehicles which do not have a heat exchanger, such as agricultural vehicles.

Accordingly, it is an aim of the present invention to provide an air outlet fitting for air conditioning or ventilation systems in motor vehicles which is adapted to be actuated to promptly supply a flow of warm air, even with the engine still cold.

Within the above aim it is an object of the invention to provide an air outlet fitting which can be effectively utilized as a temporary complement to conventional heating.

Another object of the invention, is to provide an air outlet fitting for air conditioning or ventilation systems in motor vehicles, which can be employed for heating the passenger compartment of motor vehicles even when the vehicle's heat exchanger is inoperative, or in vehicles lacking heating systems of their own, such as agricultural or industrial tractors.

This aim and these and other objects which will become apparent hereinafter are achieved by an air outlet fitting for air conditioning or ventilation systems in motor vehicles, according to the invention, including an air passage, and means for controlling a flow of air passing therethrough, said air outlet fitting being characterised in that it comprises an electric resistance means, arranged to be swept by an airflow passing through said air passage and adapted to be connected to an electrical system of a motor vehicle.

Further features and advantages of the invention will be apparent from the following detailed description of a preferred embodiment thereof, with reference to the accompanying illustrative, non-limitative drawing figures wherein:

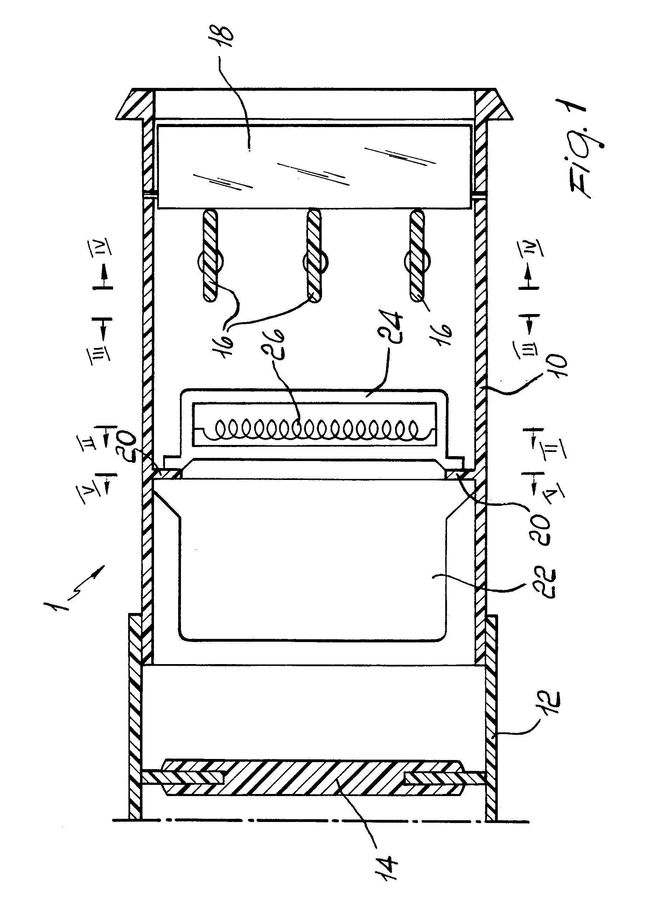

Figure 1 is a longitudinal sectional view as taken on the longitudinal mid-axis of an outlet fitting according to the invention;

Figure 2 is a transverse sectional view of the outlet fitting as taken on line II-II of Figure 1;

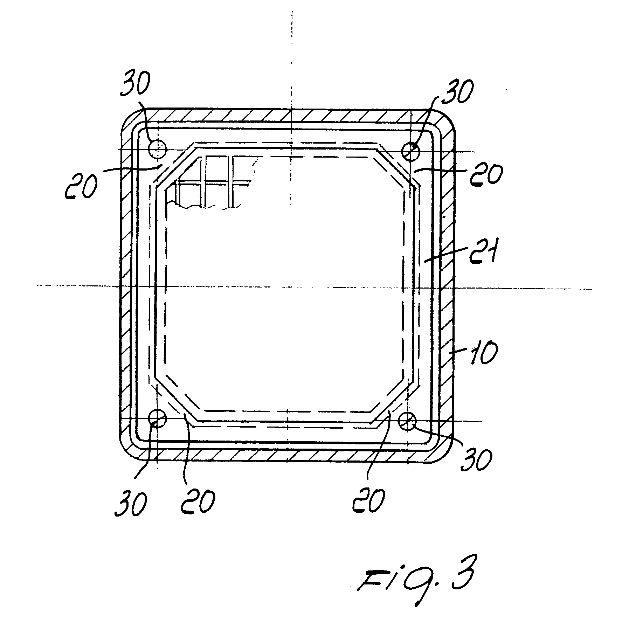

Figure 3 is a partly cut-away transverse sectional view of the outlet fitting as taken on line III-III of Figure 1;

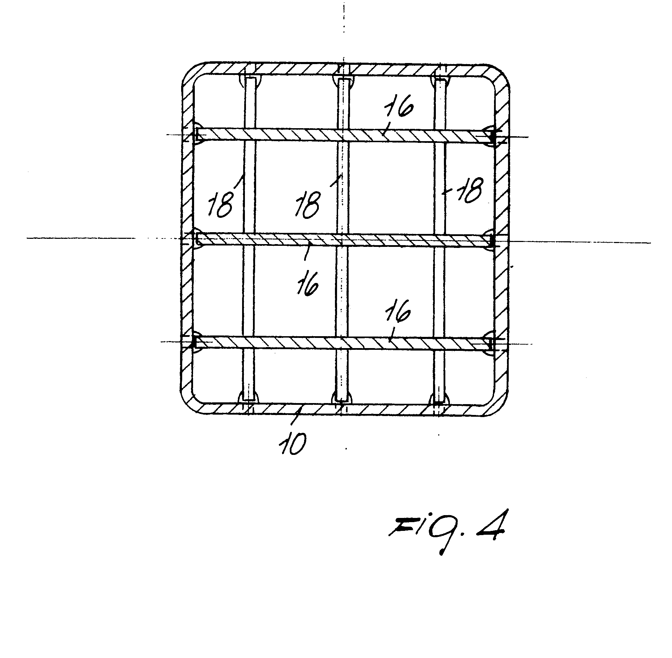

Figure 4 is a transverse sectional view of the outlet fitting as taken on line IV-IV of Figure 1;

Figure 5 is a transverse sectional view of the outlet fitting as taken on line V-V of Figure 1;

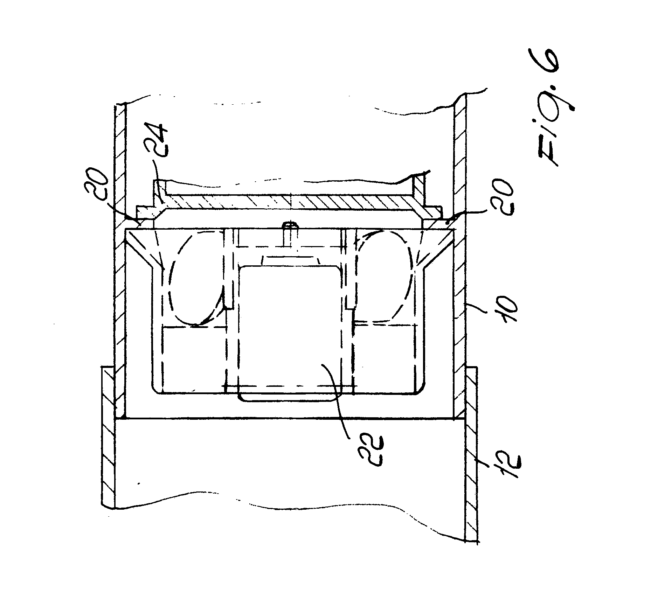

Figure 6 is a partly sectional fragmentary side elevation view of the outlet fitting according to the invention; and

Figure 7 is a simplified schematic view of an autovehicle electrical system incorporating the outlet fitting, for air conditioning or ventilating systems in motor vehicles, according to the invention.

With reference to the above cited drawing figures, the outlet fitting of this invention, generally indicated by the reference numeral 1, comprises a short conduit 10, adapted for insertion into the conduit 12, containing a shut off butterfly valve 14 known per se, the conduit 12 being a conventional part of the vehicle's air conditioning or ventilation system and connected, in a usual manner, to an external air pick up (not shown).

Obviously, whilst in the illustrated embodiment of the invention both the short conduit 10 and the conduit 12 are of square cross section, it will be appreciated that they may both have any convenient cross sectional configuration such as a circular or rectangular cross section, or they may even have different cross sections and be interconnected by a suitably configured adapted element (known per se and thus not illustrated). For example, the short conduit may be of square cross section whilst the vehicle's conduit could have a circular cross section, in this case, one may interpose between the conduit and the short conduit a tubular element, or adapter, having a suitably sized circular opening at one end thereof and a suitably sized square opening at the other end thereof.

The outlet fitting advantageously comprises, at its delivery end, in a conventional manner, pivotably mounted vanes 16 adapted for deflecting the airflow being delivered in a vertical plane, and pivotably mounted deflection vanes 18, adapted for deflecting the air flow being delivered in a horizontal plane, such vanes 16,18 being actuatable by the user through conventional means.

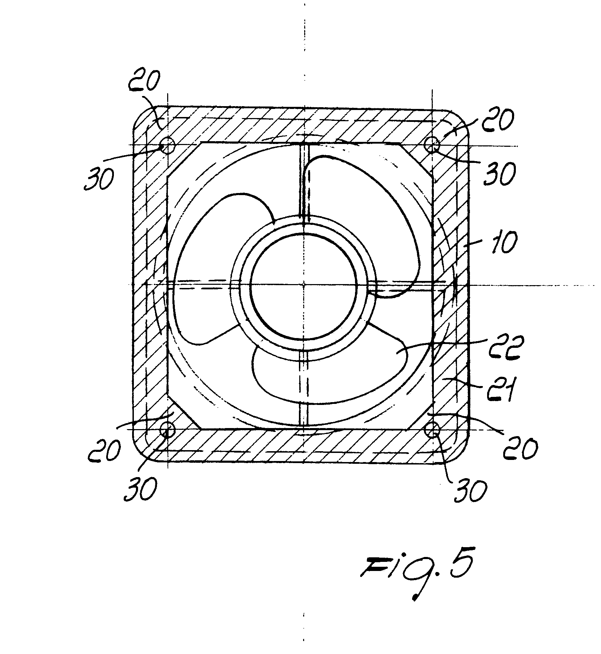

The short conduit 10 of the outlet fitting 1 also has interiorly rigidly associated therewith an inwardly protruding rim 21, including inner flanges or lugs 20 (Figure 5).

Attached to the lugs 20, at the side thereof facing the conduit 12, is a fan 22, adapted for causing an airstream to flow from the conduit, towards, and through the small conduit 10.

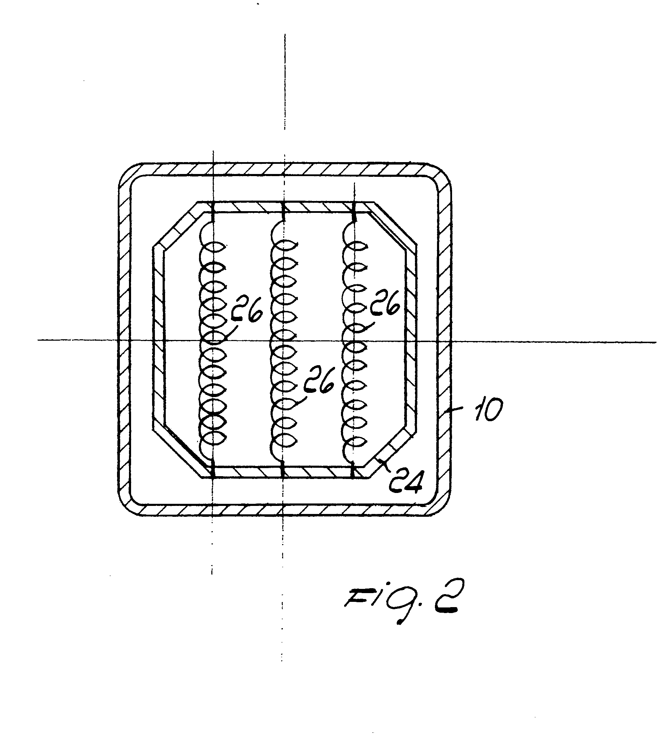

The fan 22, preferably comprises an axial flow electric fan, which is expediently attached to the lugs 20 by fixing means, such as small bolts, rivets or screws 30, and is electrically connected to and powered by a source, which may expediently be the battery 23 of the motor vehicle wherein the outlet fitting is to be installed. Attached to those same lugs 20 , at the side thereof facing away from the conduit 12, is a frame 24 adapted for carrying one or more electric resistance heaters 26 (Figure 2), electrically connected to and powered by a source which, also in this case may expediently be the vehicle's battery.

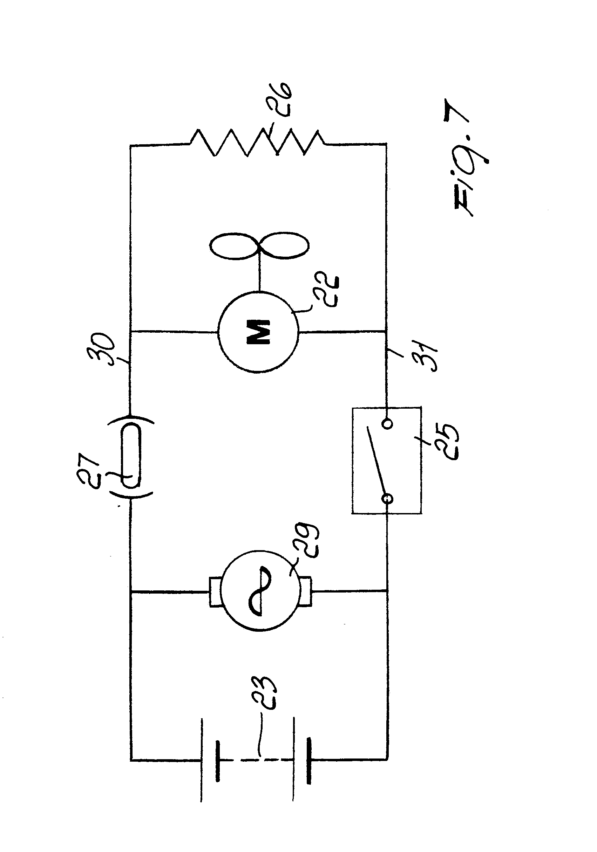

With reference to Figure 7, the electric resistance heater 26 has positive and negative terminals respectively connected via wires 30,31 to the positive and negative terminals of the battery. 23 of the motor vehicle. In a conventional manner, the motor vehicles' electrical circuit includes an alternator, indicated by the reference numeral 29.

In the illustrated example, the fan 22 is simply connected inbetween, and in parallel with the electric resistance heater 26 and the alternator 29. The extension of the wire 30 is expediently interrupted by a fuse 27, and an electrical switch 25 is provided on the wire 31, between the alternator 29 and the fan 22. Thus, the fan 22 and the electric resistance heater 26 can be selectively, simultaneously electrically connected to the battery 23 when their actuation is required by simply operating the switch 25, which may be conveniently located, for example, on the vehicles' dashboard, or console.

From the foregoing description, the operation of the air outlet fitting according to the invention will be apparent. Actuation of the switch 25 causes the wires 30,31 to become electrically connected resultantly causing actuation of the fan 22 and heating of the electric resistance heaters 26. Thus, the fan 22 creates an airstream, to be drawn from the conduit 12 of the vehicles' air conditioning or ventilation system and then forced through the short conduit 10.

In passing through the short conduit 10, the airstream is first heated by the electric resistance heaters 26, and then, the thus heated airstream can be directionally controlled as desired by actuation of the vanes 16,18 before passing out from the short conduit 10.

It has been found in practice, that electrical resistance heaters having a maximum total resistance of 150 Watts are sufficient to provide a warm airstream whilst being economical from the standpoint of energy consumption.

Thus, it will be appreciated that the outlet fitting according to the invention meets the proposed objects, and in particular that an outlet fitting is provided which is structurally simple, economical to manufacture and extremely convenient in use, in that a stream of warm air can be provided in a motor vehicle, even prior to the engine thereof reaching its normal operating temperature and even in vehicles which do not have a heating system.

While a preferred embodiment of the invention has been described, modifications and variations thereof are, of course, feasible within the above specified teachings without departing from the scope of the inventive idea.

## CLAIMS

1. An air outlet fitting for air conditioning or ventilation systems in motor vehicles, comprising an air-ducting conduit (10,12) and control and/or deflection means (14,16,18) for the air being delivered, characterised in that said conduit (10) accommodates an electric resistance means (26) arranged to be swept by the airflow through the conduit (10) and connected to the motor vehicle electric system.

2. An air outlet fitting, according to Claim 1, characterised in that also installed adjacent to said electric resistance means (26) is an electric fan (22) powered concurrently with the resistance means (26) to accelerate the airflow.

3. An air outlet fitting according to Claims 1 and 2, characterised in that said conduit has formed on its interior, an inwardly protruding rim (21), said electric fan (22) being adapted to be rigidly associated with one side of said rim, said electric resistance means being adapted to be rigidly associated with an other side of said rim (21).

4. An outlet fitting according to one or more of the preceding claims, characterised in that said rim (21) has formed thereon, lugs (20), said electric fan (22) and said electric resistance means (26) being associated with said rim (21) at said lugs (20).

5. An outlet fitting according to one or more of the preceding claims, characterised in that said electric resistance means comprise a plurality of electric resistance heaters (26) supported by a frame (24), adapted to be located inside said conduit (10,12) upstream of said electric fan (22).

6. An outlet fitting according to one or more of the preceding claims, characterised in that said electric fan (22) and said plurality of electric resistance heaters (26) are adapted to be actuated simultaneously by acting on a single switch (25).

7. An outlet fitting according to one or more of the preceding claims, wherein said plurality of electric resistance heaters (26) has a total maximum resistance of 150 Watts.

Fig. 1

Fig. 2

Fig. 3

Fig. 4

Fig. 5

Fig. 6

Fig.7

27    30

23    29    25    31    22    26

1/1

0 193 956